# EUROPEAN PATENT APPLICATION

(11) **EP 1 270 183 A1**
(43) Date of publication of application: **02.01.2003**
(21) Application number: 01305691.6
(22) Date of filing: 29.06.2001
(51) Int. Cl.: B29C 65/14, B29C 65/16, H04M 1/02

(54) **Housing construction**

(71) Applicant: Nokia Corporation, 02150 Espoo (FI)
(72) Inventor: Tat, Tee Chin, Singapore 120321 (SG); Tang, Thomas, Nokia Japan Co., Ltd., Meguro-ku, Tokyo 153-0064 (JP)
(74) Representative: Slingsby, Philip Roy

(57) **Abstract**

A method for manufacturing an equipment housing, comprising: locating together a first housing part (1) and a second housing part (2) so that the first housing part overlaps the second housing part at a join (15) between the housing parts; and irradiating the region of the join with radiation to which the first housing part is substantially transparent and the second housing part (2) is absorptive so as to heat the second housing part and fuse the housing parts (1,2) together at the join (15).

## Description

This invention relates to a housing construction and a method for joining housing parts together.

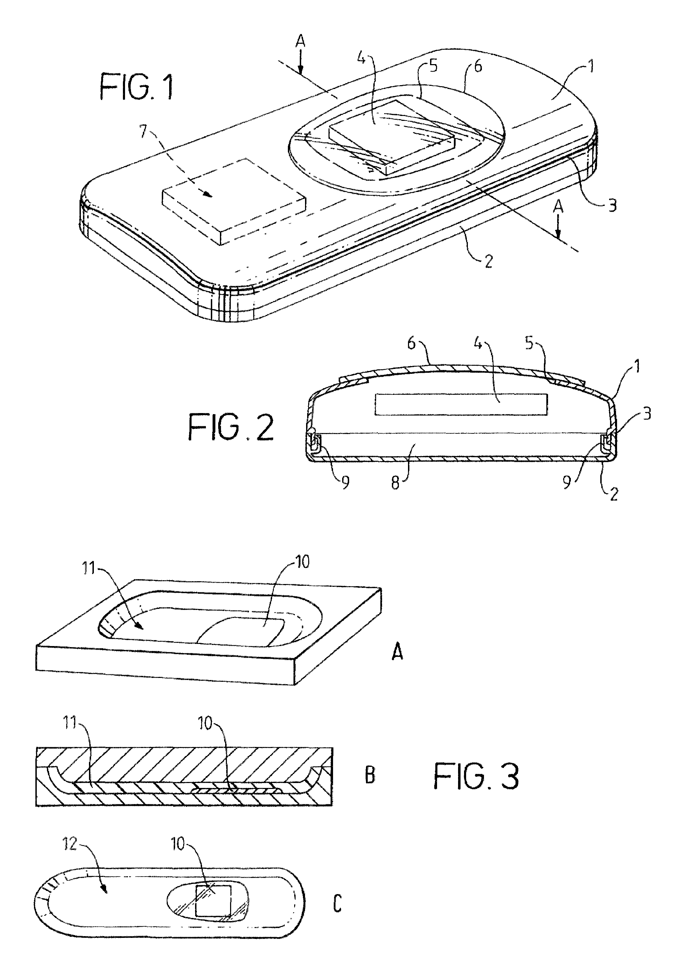

Figure 1 shows a mobile phone, and figure 2 shows a cross-section on line A-A of figure 1. The mobile phone has a housing that comprises a front or A cover 1, a back or B cover 2 and a window 6. The A cover and the B cover enclose a space 8 inside the housing in which are located a display 4 and other electronic components 7. The display is located opposite an opening in the A cover defined by a rim 5. The window 6 is transparent and is located over the opening so that the display 4 can be seen through it. The A cover and the B cover meet at a join 3.

The window 6 can be glued on to the A cover 1 by means of an adhesive compound or a double-sided adhesive tape. Alternatively, the window can be applied to the A cover as in-mould decoration (IMD). Figure 3 illustrates the use of in-mould decoration to apply the window to the A cover. The window 10 is placed in a mould cavity 11 in which the A cover is to be formed. (Step A). Then plastics material to form the A cover is injected into the mould cavity and allowed to set. (Step B). As it does so it adheres to the window with the result that the finished A cover 12 can be removed from the mould with the window 10 adhered to it. (Step C).

Conventionally the A cover and the B cover are held together by means of interior clips 9 as shown in figure 2. These allow the housing to be assembled by locating the clips of the A and B covers against each other and then pushing the covers into engagement.

Although it is easy to assemble, the housing construction illustrated in figures 1 and 2 has a number of disadvantages. First, it can sometimes offer poor resistance to environmental contaminants such as dirt or liquids, which can make their way into the housing either at the join between the A cover and the B cover or at the join between the A cover and the window. These contaminants can cause the electronic components inside the housing to malfunction. In that situation it is useful to be able to disassemble the housing by disengaging the clips 9 so as to effect a repair. Second, unless a large number of clips are provided - which would increase the weight and cost of the housing - the construction of figures 1 and 2 can sometimes offer little rigidity to the housing.

Instead of using clips, screws can be used to join the covers to each other. These offer increased rigidity but they make the housing more awkward to assemble.

The problems of contaminants entering the housing can be addressed by using O-rings at the joins but this increases cost.

There is therefore a need for an improved housing construction.

According to one aspect of the present invention there is provided a method for manufacturing an equipment housing, comprising: locating together a first housing part and a second housing part so that the first housing part overlaps the second housing part at a join between the housing parts; and irradiating the region of the join with radiation to which the first housing part is substantially transparent and the second housing part is absorptive so as to heat the second housing part and fuse the housing parts together at the join.

According to another aspect of the present invention there is provided an equipment housing comprising a first housing part and a second housing part located so that the first housing part overlaps the second housing part at a join between the housing parts; and the parts being laser welded together at the join.

The first housing part is preferably located outward of the second housing part at the join, most preferably over the entirety of the join. By outward is meant outward with respect to the housing, so that the first housing part preferably constitutes the exterior surface of the housing at the join.

The first and second housing parts are preferably located in contact with each other at the join.

The method may comprise irradiating the entire length of the join. This preferably causes the parts to be fused together in a continuous strip around the join. By this means the interior of the housing may be sealed from the exterior. The housing preferably has at least two electrical contacts embedded in it and exposed at the outer surface of the housing, to allow electrical power to be supplied to components within the housing. The power may serve to charge a battery of the equipment within the housing. Alternatively, contactless charging means such a magnetically actuated charger could be provided in the housing.

The second housing part preferably includes a display opening or another form of opening. The second housing part may cover that opening, with the join conveniently surrounding the opening.

One of the first and second housing parts is suitably a back cover of the housing. The other of the housing parts is suitably a front cover of the housing. Alternatively, one of the housing parts could be a window of the housing, conveniently a transparent display window and/or an IMD window.

The radiation is preferably laser light. The wavelength of the laser light is preferably in the non-visible part of the spectrum.

Preferably the irradiation step is performed so as to generate insufficient heat to melt the outer surface of the first housing part. By that means, the outer surface of the first housing part, which preferably constitutes the outer surface of the housing in the region of the join, is preferably unaffected by the irradiation process.

The method preferably comprises the steps of: locating together a third housing part and the second housing part so that the third housing part overlaps the second housing part at a join between the second and third housing parts; and irradiating the region of the join between the second and third housing parts with radiation to which the third housing part is substantially transparent and the second housing part is absorptive so as to heat the second housing part and fuse the second and third housing parts together at the join.

The housing parts are preferably welded together at the join by the radiation.

The housing parts are preferably made of plastics material. The melting points of the housing parts are preferably below 250°C, more preferably below 200°C.

The housing could be a housing for a portable electronic device, for example a mobile phone.

The step of locating together the first and second parts may be formed by a process of in-mould decoration. The first part may be moulded into the second part.

The present invention will now be described by way of example with reference to the accompanying drawings, in which:
figure 1 shows a housing for a mobile phone;
figure 2 shows a cross-section on line A-A in figure 1;
figure 3 illustrates the application of a window to an A cover by in-mould decoration;
figure 4 shows a cross-section through a housing for a mobile phone;
figure 5 illustrates a laser welding process; and
figure 6 shows designs for housing part overlaps.

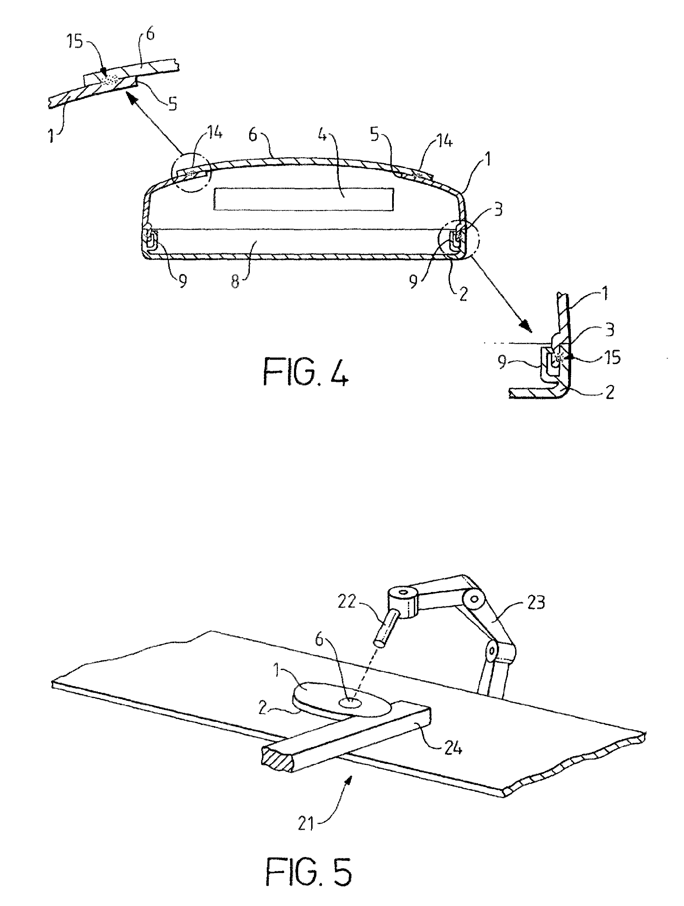

Figure 4 shows a cross-section through a housing for a mobile phone whose basic components are broadly similar to those of the housing of figures 1 and 2. In figure 4 like components are numbered as for figures 1 and 2.

In the housing of figure 4 the join 14 at the periphery of the window 6, between the window and the A cover, and the join 3 between the A cover and the B cover are laser welded. At each of those joins a laser welding process has been used to melt at least one of the components that meet at the join, to fuse those components together. The fused zones are indicated at 15 in the enlarged regions of figure 4 The laser welding runs around the entirety of each of the joins. As a result, the interior of the housing is sealed from the outside; this prevents contaminants from entering the housing. Also, since the components are fused together the housing is stronger than it would be if it was only clipped together.

The process of putting IMD foil on to the window is preferably done separately from the moulding of the A cover. To achieve this the IMD foil is placed in the window mould, then window material is injected into the mould and the IMD foil is stuck to the window when it is cooled. This forms what can be termed the IMD Window. The IMD window is then placed on the A cover. Pressure is then applied to clamp the two parts together before the laser welding.

Figure 5 illustrates the laser welding process. Having been clipped together, and with the window 6 in place on the A cover 1, the housing is moved along a production line to a laser welding station indicated generally at 21. The laser welding station has a laser 22 on a robot arm 23. Once the housing has been located relative to the arm against a jig 24 the laser is activated and the arm 23 is moved along a pre-programmed path to scan the laser beam over the joins that are to be welded. Where it hits the housing the laser beam is absorbed, generating heat which locally melts one or more of the housing components at that location and creating the weld.

The laser is suitably a diode laser.

At each join where a weld is made it is preferred that one of the two components that meet at the join overlaps the other, and that the overlapping component (when viewed from outside the housing) is relatively transparent to the laser beam but the overlapped component is relatively absorptive to the laser beam. For example, in the housing of figure 4 the window 6 overlaps the A cover 1 at the join between them, and the window is preferably transparent to the laser beam whereas the A cover is preferably absorptive to it. The B cover 2 overlaps the A cover 1 at the join 3 between them, and the B cover is preferably transparent to the laser beam whereas the A cover is preferably absorptive. With this arrangement the centre of the zone at which melting occurs during the laser welding process is spaced inward of the outer surface of the housing. The laser beam is preferably scanned along the joins slowly enough to cause local melting sufficient to form a weld but quickly enough that the zone of melting does not spread to the outer surface of the housing. This leaves the outer surface of the housing intact after the laser welding process, so that the surface finish of the housing is not marred by the laser welding.

A number of factors influence the effectiveness of the welding process. One is the degree of light transmission through the part to be welded. Another is the power of the laser beam that is used. Normally low transmission can be compensated for by increasing the laser power. Theoretically, as long the laser is able to transmit through the material, it should be possible to create a weld by adjusting the laser power to a sufficiently high level. However, it should be noted that the quality of the weld will be poorer if there is not enough laser power to heat up the interface area adequately. The applicant has successfully laser-welded a material having a transmission rate of 30% (material C1000HF-16100 natural). However, in general more transmissive materials are preferred.

The materials of the window, the A cover and the B cover are selected to have the appropriate absorptive properties. By the use of suitable pigments or dyes within the materials, the materials' absorption in the visible range can be selected independently of their absorption at the wavelength of the chosen laser. The laser can also be selected to have a suitable emission wavelength. Examples of materials that can be used for the transmissive component (through which the laser is shone to the weld) and the absorptive component are listed below:

| **Absorptive** | **Transmissive** |
|---|---|
| PC/ABS C1000HF warm black | PC/ABS C1000HF natural |
| PC/ABS C1000HF warm black | PC Lexan HF 1110 clear |
| PC/ABS C1000HF warm black | PMMA Oroglas M1-4T clear |
| PC/ABS C1000HF warm black | PC IR grade makrolon 2405 |
| PC Xantar J50/20/TF/15 | PC/ABS C1000HF natural |
| ABS Terluran 949T | PC IR grade makrolon 2405 |
| PC Lexan HF 1110 black | PC IR grade makrolon 2405 |
| PC Xantar J50/20/TF/15 | PC IR grade makrolon 2405 |
| ABS Terluran 949T | PC/ABS C1000HF natural |
| PC Lexan HF 1110 black | PC/ABS C1000HF natural |
| ABS Terluran 949T | PMMA Oroglas M1-4T clear |
| PC Lexan HF 1110 black | PMMA Oroglas M1-4T clear |
| PC Xantar J50/20/TF/15 | PMMA Oroglas M1-4T clear |
| PC Lexan HF 1110 black | PC Lexan HF 1110 clear |
| ABS Terluran 949T | PC Lexan HF 1110 clear |

Where a dye is used it should preferably not affect the optical characteristic of the parts too much if possible.

Instead of the A cover being relatively absorptive it could be relatively transparent and the other components relatively absorptive to the laser beam.

The clips 9 could be omitted in the construction of figure 4.

The window 6 is preferably attached to the A cover 1 by an in-mould decoration technique.

Optionally, only one of the welds could be made - for example, the weld between the window 6 and the A cover 1 could be omitted.

Other techniques such as ultrasonic welding could be used to weld the parts of the housing together. However, laser welding has been found to have a further advantage in that it does not affect sensitive components within the housing.

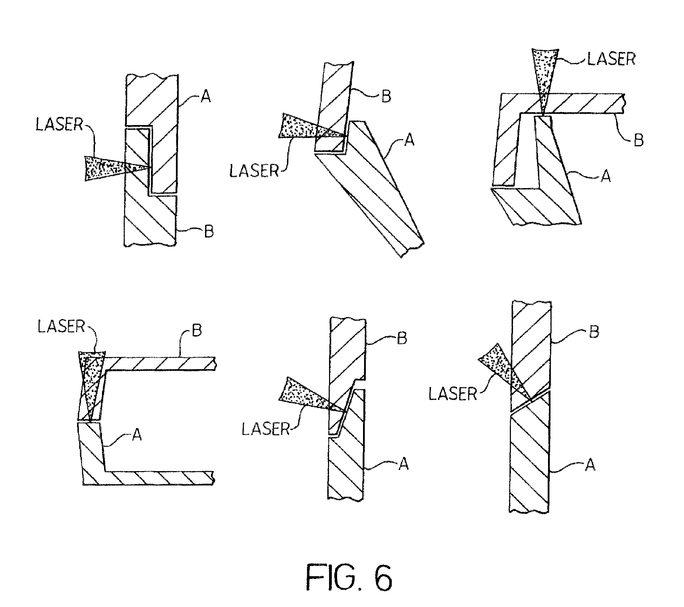

Figure 6 illustrates some examples of configurations for the overlap between two housing parts A and B and the direction of a laser on to the overlap to weld parts A and B together.

The technique described above could be used for the housings of other articles than mobile phones, for instance calculators and torches.

The applicant draws attention to the fact that the present invention may include any feature or combination of features disclosed herein either implicitly or explicitly or any generalisation thereof, without limitation to the scope of any of the present claims. In view of the foregoing description it will be evident to a person skilled in the art that various modifications may be made within the scope of the invention.

## Claims

1. A method for manufacturing an equipment housing, comprising:
locating together a first housing part and a second housing part so that the first housing part overlaps the second housing part at a join between the housing parts; and
irradiating the region of the join with radiation to which the first housing part is substantially transparent and the second housing part is absorptive so as to heat the second housing part and fuse the housing parts together at the join.

2. A method as claimed in claim 1, wherein the first housing part is located outward of the second housing part at the join.

3. A method as claimed in claim 1 or 2, wherein the second housing part includes a display opening.

4. A method as claimed in any preceding claim, wherein the first housing part is a back cover of the housing and the second housing part is a front cover of the housing.

5. A method as claimed in any of claims 1 to 3, wherein the first housing part is a transparent display window.

6. A method as claimed in claim 5, wherein the second housing part is a front cover of the housing.

7. A method as claimed in any preceding claim, wherein the radiation is laser light.

8. A method as claimed in claim 7, wherein the wavelength of the laser light is in the non-visible part of the spectrum.

9. A method as claimed in any preceding claim, wherein the irradiation step is performed so as to generate insufficient heat to melt the outer surface of the first housing part.

10. A method as claimed in any preceding claim, comprising the steps of:
locating together a third housing part and the second housing part so that the third housing part overlaps the second housing part at a join between the second and third housing parts; and
irradiating the region of the join between the second and third housing parts with radiation to which the third housing part is substantially transparent and the second housing part is absorptive so as to heat the second housing part and fuse the second and third housing parts together at the join.

11. A method as claimed in any preceding claim, wherein the housing is a housing for a portable electronic device.

12. A method as claimed in any preceding claim, wherein the housing is a housing for a mobile phone.

13. A method as claimed in any preceding claim, wherein the housing is a housing for a portable electronic device.

14. An equipment housing comprising a first housing part and a second housing part located so that the first housing part overlaps the second housing part at a join between the housing parts; and the parts being laser welded together at the join.

15. An equipment housing as claimed in claim 12, wherein the first housing part is located outward of the second housing part at the join.

16. An equipment housing as claimed in claim 13, wherein the welded zone does not extend to the outer surface of the first housing part.

17. A method for manufacturing an equipment housing substantially as herein described with reference to figures 4 to 6 of the accompanying drawings.

18. An equipment housing substantially as herein described with reference to figures 4 to 6 of the accompanying drawings.
